# FASCICULE DE BREVET EUROPEEN

(11) **EP 2 023 781 B1**
(45) Date de publication et mention de la délivrance du brevet: **07.07.2010**
(21) Numéro de dépôt: 07788959.0
(22) Date de dépôt: 04.06.2007
(51) Int. Cl.: A47J 27/21, H05B 3/74

(54) **APPAREIL MÉNAGER POUR LE CHAUFFAGE DE LIQUIDE**
HAUSHALTSGERÄT ZUR ERHITZUNG VON FLÜSSIGKEITEN
HOUSEHOLD APPLIANCE FOR HEATING LIQUID

(30) Priorité: 05.06.2006 FR 0604982
(43) Date de publication de la demande: 18.02.2009
(73) Titulaire: SEB S.A., 69130 Ecully (FR)
(72) Inventeur: IREMAN, Peter, F-14114 Ver Sur Mer (FR); DURAND, Lionnel, F-14700 Saint Germain Langot (FR); DIORE, Christian, F-14610 Cairon (FR)
(74) Mandataire: Vuillermoz, Bruno
(86) Numéro de dépôt international: PCT/FR2007/051374
(87) Numéro de publication internationale: WO 2007/141453

(56) Documents cités:
- WO-A-98/54931
- FR-A1- 2 791 857

## Description

### DOMAINE TECHNIQUE

La présente invention concerne un appareil électrique ménager pour le chauffage de liquide, comportant un réservoir contenant le liquide à chauffer, tel qu'une bouilloire. La présente invention relève du domaine des appareils électroménagers domestiques comportant un réservoir qui tient lieu d'enceinte contenant le liquide à chauffer.

### ETAT ANTERIEUR DE LA TECHNIQUE

Le terme « bouilloire » désigne en général un appareil électroménager à usage domestique comportant un réservoir destiné à contenir le liquide à chauffer. Les bouilloires comprennent en outre un élément chauffant présentant un élément résistif généralement situé au fond du réservoir. Lorsqu'il est alimenté en courant électrique, cet élément résistif peut chauffer par effet Joule le liquide contenu dans le réservoir.

Les bouilloires électriques se caractérisent généralement par la faible puissance électrique qu'elles mettent en oeuvre, typiquement inférieure à 3000 W, et par leur contenance relativement faible, typiquement inférieure à 2,5 L. Le plus souvent, de telles bouilloires électriques sont utilisées pour porter à ébullition de l'eau, le plus rapidement possible et à raison de plusieurs fois par jour. Les bouilloires doivent donc, à l'instar des autres appareils électroménagers grand public, être robustes, efficaces et bon marché.

Or, les bouilloires connues de l'art antérieur ne sont pas entièrement satisfaisantes en termes de fiabilité et/ou de coût. Tout d'abord, on connaît par exemple des bouilloires dont la partie inférieure intègre, sous la coupelle métallique destinée à transmettre la chaleur émise par la piste résistive, un sous-ensemble complet regroupant tous les composants nécessaires aux fonctions de chauffage, de régulation, de sécurité, de connexion et de commande.

Pour la connexion avec la source d'énergie électrique, de tels sous-ensembles comprennent généralement des connecteurs électromécaniques qui sont des pièces complexes, donc coûteuses.

De plus, tous ces composants doivent être placés à une certaine distance de l'élément chauffant, ce qui engendre un encombrement non négligeable. En outre, la fonction de régulation ou de détection de l'ébullition est souvent assurée par un composant dit « bilame » qui coupe le circuit d'alimentation électrique de l'élément chauffant par différence de dilatation entre les deux métaux qui le composent. Or, pour permettre aux bilames de jouer leur rôle, il est nécessaire d'aménager un canal susceptible de les mettre en contact avec la vapeur d'eau produite à partir de l'ébullition du liquide contenu dans le réservoir. Un tel aménagement est de nature à obérer les coûts de production, donc le prix de revient d'une telle bouilloire. De plus, la précision des éléments bilame est relativement limitée, c'est-à-dire que l'arrêt du chauffage par ces éléments intervient à des instants variables.

Plus récemment, on a remplacé cet élément bilame par un composant électronique thermométrique, c'est-à-dire apte à mesurer l'élévation de température lors du chauffage, du type résistance à coefficient de température négatif (C.T.N.) ou du type thermostat. On entend par composant thermométriques un composant délivrant un signal électrique susceptible d'évoluer avec la température de son environnement.

Cependant, si de tels composants électroniques sont effectivement supérieurs aux éléments bilame en termes de durée de vie et de précision de mesure de la température, la position de tels composants au niveau de l'élément chauffant pose cependant des problèmes dans les bouilloires de l'art antérieur. Ainsi, comme de tels composants électroniques sont capables de supporter des températures relativement importantes, ils sont positionnés près de la piste résistive de l'élément chauffant, c'est-à-dire à proximité d'une zone propice à la formation de tartre, comme cela est le cas par exemple de la bouilloire du document FR-A-2 791 857.

En général, les composants thermométriques précités ont pour fonction de mesurer une température représentative de la température du liquide chauffé, mais ils ne mesurent pas directement la température du liquide. Au contraire, ces composants thermométriques mesurent plutôt la variation de la température de la piste résistive qui, elle, représente indirectement la température du liquide chauffé, comme cela est le cas de la bouilloire du document précité.

En effet, tant que le liquide est en chauffe, la piste résistive présente une température en augmentation. Lorsque le liquide est à ébullition, c'est-à-dire que sa température ne varie plus, la dissipation d'énergie calorifique de la piste résistive vers le liquide se ralentit et, par conséquent, la température de la piste résistive commence à stagner. C'est la détection de cette stagnation par le circuit de régulation qui entraîne la coupure de l'alimentation de l'élément chauffant par le circuit de commande.

Cependant, la couche de tartre qui se forme, au fur et à mesure des cycles de chauffage, sur la coupelle transmettant la chaleur au liquide tend à « isoler » thermiquement la piste résistive du liquide chauffé. Par conséquent, au fur et à mesure de l'entartrage de la bouilloire, la température au niveau de la piste résistive, c'est-à-dire celle mesurée par les composants thermométriques précités, tend à être moins représentative de la température du liquide chauffé.

Or, cette dérive peut provoquer un allongement ou un raccourcissement de la durée du chauffage à ébullition du liquide, ce qui n'est pas satisfaisant pour l'utilisateur. En effet, soit la consommation électrique de sa bouilloire va augmenter à cause de la durée excessive de chauffage, soit le liquide n'atteint plus la température cible, par exemple 100°C dans le cas de l'ébullition.

Dans le pire des cas, une dérive excessive conduit à la destruction d'un élément de sécurité associé à l'élément chauffant, tel qu'un thermofusible, et, partant, à l'arrêt définitif de la bouilloire.

On connaît par ailleurs du document WO-A-98 54931 une bouilloire dont le composant thermométrique est agencé sensiblement au centre d'une plaque de support des pistes résistives et dont les autres composants de contrôle sont déportés au niveau d'une poignée de la bouilloire.

La présente invention a donc pour but de supprimer, ou tout au moins de limiter fortement, les erreurs de mesure de la température d'un élément chauffant lors de son entartrage, et de s'affranchir par conséquent de toute dérive dans la régulation de la température du liquide chauffé.

Outre le manque de fiabilité, la présente invention a également pour but de remédier aux autres inconvénients des bouilloires de l'art antérieur, notamment en termes de facilité de production, donc de coût et d'encombrement.

### OBJET DE L'INVENTION

La présente invention concerne donc un appareil électrique ménagé pour le chauffage du liquide, dont la régulation de température ne dépend pas de l'entartrage de l'élément chauffant, dont la conception permet une production facile et bon marché et dont l'implantation des composants électriques peut être réalisée avec un encombrement réduit.

La présente invention vise un appareil électrique ménager pour le chauffage de liquide comportant un réservoir destiné à contenir le liquide à chauffer, un élément chauffant présentant au moins une piste résistive réalisée par sérigraphie sur une plaque électriquement isolante solidaire d'une fraction dudit réservoir, et un dispositif de contrôle de l'alimentation électrique dudit élément chauffant. Ce dispositif de contrôle comporte une pluralité de composants électroniques parmi lesquels se trouvent au moins un composant thermométrique, un composant de commutation apte à ouvrir et à fermer le circuit d'alimentation électrique dudit élément chauffant et un composant de commande destiné à piloter ledit composant de commutation en fonction des signaux issus dudit composant thermométrique. Selon l'invention, cet appareil se caractérise en ce qu'au moins ces composants thermométrique de commutation et de commande sont implantés sur ladite plaque isolante au sein d'une même région exempte de piste résistive, cette région étant entourée d'une zone périphérique exempte de piste résistive et de composants électroniques.

Autrement dit, le composant thermométrique se trouve implanté à distance de la piste résistive. Ainsi, le composant thermométrique mesure la température de la plaque isolante en une région dont la température est plus influencée par la température du liquide que par celle de la résistance chauffante. Dans la suite de la description, on désignera par « plaque électriquement isolante », une plaque qui n'est pas forcément isolante électriquement dans son intégralité, mais qui est isolante électriquement au moins sur la face qui reçoit la piste résistive. Il peut ainsi s'agir d'une plaque métallique, typiquement en acier inoxydable employé pour ses propriétés de compatibilité alimentaire, revêtue d'une couche d'émail ou analogue sur sa face destinée à recevoir la piste résistive. Il peut également s'agir d'une plaque à base d'un matériau isolant électriquement, typiquement à base de céramique ou de verre, sur laquelle peut être directement sérigraphiée la piste résistive. Cette même plaque peut, le cas échéant, être recouverte sur sa face au contact du liquide, d'une couche compatible pour le contact alimentaire. Cette couche peut par exemple être à base d'acier inoxydable.

En pratique, la zone périphérique peut présenter une largeur telle que la température maximale de l'un quelconque de ses points, en particulier au niveau du composant thermométrique, reste inférieure à 105°C lorsque du liquide est présent dans le réservoir.

Ainsi, le composant peut être situé au niveau d'une région qui s'entartre relativement peu.

De plus, le fait que les principaux composants électroniques du dispositif de contrôle sont tous implantés au sein de la même région caractéristique permet de diminuer l'encombrement occupé par les composants électroniques du dispositif de contrôle.

Selon une forme de réalisation de l'invention, la zone périphérique peut présenter une largeur supérieure ou égale à 5 mm.

Cela permet de limiter la température de la région où est implanté le composant thermométrique.

Selon une autre caractéristique pratique de l'invention, la superficie de ladite région peut représenter au moins 10% et plus particulièrement au moins 15% de la superficie totale de la plaque isolante.

Cela permet d'assurer une température relativement froide au niveau de cette région, ce qui contribue au bon fonctionnement des composants électroniques qui y sont implantés.

Selon une forme de réalisation pratique de l'invention, le composant thermométrique peut être implanté dans la portion centrale de la plaque isolante.

Cela permet notamment de mesurer une température représentative de la température du liquide an chauffe.

De manière pratique, le composant thermométrique peut être monté en surface sur la face de la plaque isolante sur laquelle s'étend la piste résistive. Cette caractéristique permet de faciliter la fabrication de l'appareil, d'en diminuer l'encombrement et donc le prix de revient.

En pratique, le composant thermométrique peut être une thermistance présentant une résistance variant en fonction de la température de la plaque isolante située au niveau de ladite région. Un tel composant permet de mesurer des températures avec une précision, une étendue de mesure et une réactivité adaptée au cycle de chauffage de l'appareil.

Pratiquement, la thermistance peut être de type résistance à coefficient de température négatif. Un tel composant présente un signal facilement exploitable pour piloter le composant de commutation.

Selon une autre forme de réalisation également avantageuse de l'invention, l'appareil électrique ménager peut comporter un deuxième composant thermométrique implanté sur ladite plaque isolante à proximité de la piste résistive.

Ce deuxième composant thermométrique peut donc, contrairement au premier, se trouver implanté au niveau d'une région de l'élément chauffant qui s'entartre relativement facilement. Par conséquent, en comparant la température mesurée par ce deuxième composant thermométrique avec celle mesurée par le premier, on peut déterminer le niveau d'entartrage de l'appareil. Surtout, ce deuxième composant thermométrique permet de détecter un enclenchement de bouilloire sans eau dans le réservoir, fonctionnement dit "marche à sec", susceptible d'entraîner une élévation rapide de température des pistes chauffantes jusqu'à leur destruction.

En pratique, l'appareil peut comporter un circuit d'avertissement apte à délivrer une information visuelle ou sonore lorsque l'écart entre les températures mesurées par les deux composants thermométriques dépasse un seuil prédéterminé.

Par ailleurs, la présente invention concerne également un procédé, dont la mise en oeuvre est simplifiée, de fabrication d'un appareil électrique ménager pour le chauffage de liquide. Un tel procédé permet de produire de tels appareils électriques à coût réduit.

Le procédé objet de l'invention est défini dans la revendication 11 et est destiné à la fabrication d'un appareil électrique ménager pour le chauffage de liquide comportant un réservoir destiné à contenir le liquide à chauffer, ce réservoir comportant un élément chauffant comprenant une plaque isolante. Selon l'invention, ce procédé comprend les étapes consistant à :
- réaliser de façon automatisée une piste résistive par sérigraphie sur la plaque isolante ;
- revêtir de façon automatisée cette plaque isolante d'au moins une couche de protection ;
- réaliser de façon automatisée un dispositif de contrôle comportant une pluralité de composants électroniques parmi lesquels se trouvent au moins un composant thermométrique, un composant de commutation apte à ouvrir ou à fermer le circuit d'alimentation électrique de l'élément chauffant et un composant de commande pilotant ce composant de commutation en fonction des signaux issus du composant thermométriques, les composants électroniques étant reliés par des pistes électriquement conductrices également réalisées de façon automatisée ;

Le procédé objet de l'invention se caractérise en ce qu'au moins le composant thermométrique est implanté sur ladite plaque isolante au sein d'une région exempte de piste résistive, ladite région étant entourée d'une zone périphérique exempte de piste résistive et de composants électroniques.

En pratique, ces composants électroniques peuvent être tous implantés de façon automatisée au sein de ladite région.

### BREVE DESCRIPTION DES FIGURES

La manière dont l'invention peut être réalisée et les avantages qui en découlent ressortiront mieux de l'exemple de réalisation qui suit, donné à titre indicatif et non limitatif, à l'appui des figures annexées.
La figure lest une représentation schématique en perspective sommaire de certaines des parties électriques d'un appareil conforme à l'invention.

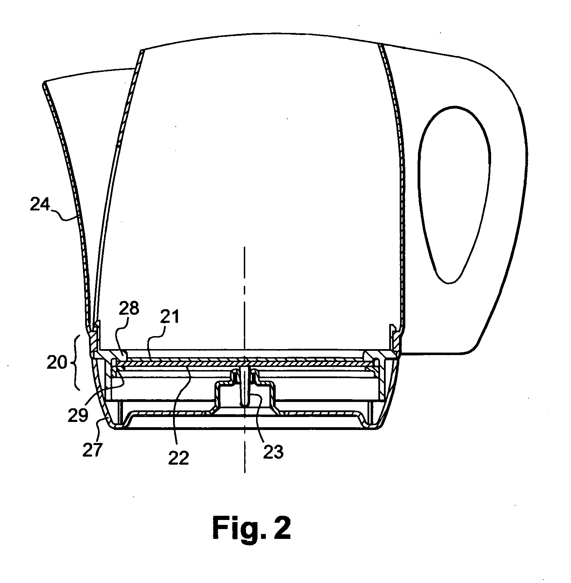

La figure 2 est une représentation schématique en coupe du corps incluant le réservoir d'un appareil électroménager domestique conforme à l'invention.

### MODE DE REALISATION DE L'INVENTION

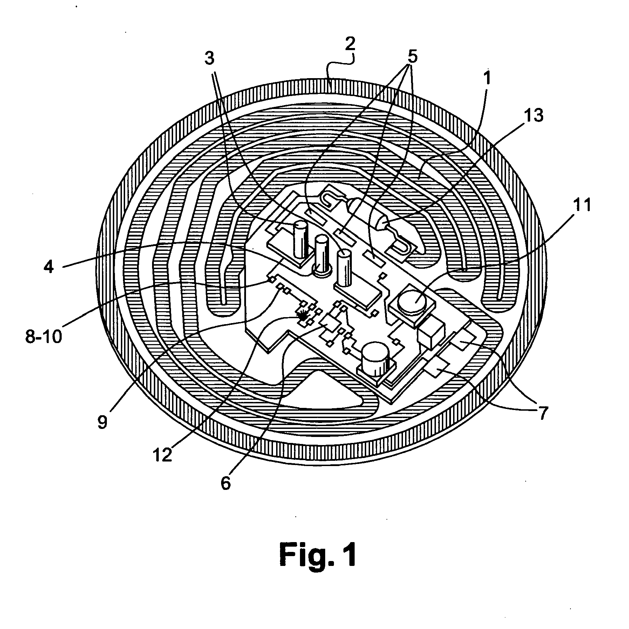

La figure 1 illustre donc les parties électriques d'un appareil électroménager domestique conforme à une forme de réalisation de l'invention et illustré par la figure 2.De manière classique, comme le montre la figure 2, le fond de la bouilloire présente une coupelle **20** globalement en forme de disque, mais qui pourrait également revêtir d'autres formes sans pour autant sortir du cadre de cette invention. La coupelle **20** est ici constituée d'une armature métallique **21** plane qui est solidarisée sur les parois **24,** généralement en matière plastique, de la bouilloire au niveau du fond du réservoir composant la bouilloire.

La solidarisation de la coupelle **20** est usuellement réalisée au moyen d'une collerette (non représentée) issue de l'emboutissage et prévue sur le pourtour de l'armature métallique **21.** Pour éviter de trop échauffer les parois **24** en matière plastique, la coupelle **20** peut présenter sur sa périphérie un élément ou une géométrie, par exemple une couronne tronconique, apte à générer un gradient thermique limitant la température de la collerette.

En l'occurrence, la coupelle est constituée d'une plaque plane chauffante **2** tenue de manière étanche entre deux bagues périphériques supérieure **28** et inférieure **29** elles-mêmes serrées par une jupe inférieure **27** de fixation prolongeant la paroi extérieure de la bouilloire.

L'armature métallique **21** est constituée d'un métal compatible avec les exigences sanitaires et alimentaires, tel qu'un acier inoxydable. L'acier inoxydable peut en outre être sélectionné en fonction de sa « vitesse » d'entartrage, de manière à retarder et à limiter la formation de tartre.

La coupelle **20** ainsi solidarisée se présente donc avec la face munie des composants tournée vers le bas. De plus et de manière classique, le fond de la bouilloire est apte à être couplé à un socle pour l'alimentation électrique.

La figure 1 représente la face « sèche » de la coupelle située généralement au fond du réservoir comportant la bouilloire. Cette face est dite « sèche » par opposition à la face qui se trouve en contact avec le liquide à chauffer. En effet, l'autre face de la coupelle, ou face « supérieure », est en contact avec le liquide et peut donc être dénommée face « humide » de la plaque isolante **2.** La face humide est généralement constituée du métal formant l'armature métallique **21** de manière à transmettre l'énergie calorifique au liquide à chauffer sur toute la surface de la coupelle **20.**

Sur la face « sèche », comme le montre la figure 1, se trouve un élément chauffant présentant une piste résistive **1** réalisée sur une plaque électriquement isolante **2.** Par « plaque électriquement isolante », on entend, dans le cadre des figures 1 et 2, une plaque comportant un revêtement électriquement isolant déposé sur l'armature métallique **21** composant la coupelle **20.** En l'occurrence, la plaque électriquement isolante **22** présente une ou plusieurs couches d'émail recouvrant la face inférieure de l'armature métallique **21** composant la coupelle **20.**

L'épaisseur et la nature des couches d'émail, à l'instar de celles des autres matériaux susceptibles de composer la coupelle **20,** sont sélectionnées de manière àtransmettre convenablement au liquide à chauffer l'énergie calorifique dégagée par effet Joule au niveau de la piste résistive 1. En d'autres termes, s'ils sont électriquement isolants, les matériaux de la coupelle **20** n'en sont pas moins de relativement bons conducteurs thermiques.

Alternativement à cette forme de réalisation de la coupelle **20,** on peut prévoir de constituer l'armature de la coupelle en un matériau électriquement isolant, telle qu'une céramique ou du verre. Pour cela, on peut prévoir d'employer un matériau compatible avec les exigences sanitaires et alimentaires, ou encore de revêtir un matériau électriquement isolant d'un film présentant cette compatibilité. De plus, on peut prévoir de réaliser le reste du réservoir, et notamment les parois, en verre, ce qui permet notamment une bonne relative isolation thermique et un contrôle visuel de l'état du liquide en chauffe.

Au niveau de la portion centrale de la plaque isolante **2,** se trouve un dispositif de contrôle de l'alimentation électrique de l'élément chauffant composé de plusieurs composants électroniques. Ces composants électroniques comprennent notamment un composant thermométrique **9**, en l'occurrence une résistance à coefficient de température négatif (C.T.N.), un composant de commutation **11** apte à ouvrir et à fermer le circuit d'alimentation électrique de l'élément chauffant, ainsi qu'un composant de commande 6 destiné à piloter le composant de commutation **11** en fonction des signaux issus du composant thermométrique **9.**

Dans l'exemple de la figure 1, le composant thermométrique est donc une résistance à coefficient de température négatif(C.T.N.), mais il pourrait s'agir d'un autre composant électronique à condition que celui-ci soit apte à délivrer un signal électrique susceptible d'évoluer avec la température de son environnement et apte à supporter des cycles de montée à une température élevée, typiquement comprise entre 100°C et 125°C.

Ainsi, le composant thermométrique **9** pourrait être constitué par un microcontrôleur, et notamment le microcontrôleur assurant la commande de l'alimentation de la piste résistive. En effet, la fréquence d'horloge de certains microcontrôleurs varie en fonction de la température de son environnement, c'est-à-dire de son voisinage. Cette construction permet de réduire le nombre de composants électroniques nécessaires.

Le composant de commutation **11,** qui joue par définition le rôle d'élément de coupure de l'alimentation électrique, est un triac dans l'exemple de la figure 1. Il pourrait cependant s'agir d'un autre composant électrique assurant cette fonction, comme par exemple un relais.

De même, le composant de commande 6 pilotant le triac **11** est ici illustré par un microcontrôleur. Néanmoins, là encore, il est possible d'employer un autre composant pour piloter le composant de commutation **11** sans pour autant sortir du cadre de cette invention.

Conformément à l'invention, le composant thermométrique **9** est implanté sur la plaque isolante **2** au sein d'une région exempte de piste résistive **1.** De plus, cette région, matérialisée sur la figure 1 par un trait sombre épais, est entourée d'une zone périphérique qui est également exempte de piste résistive **1** et de composant électronique. Ainsi, cette zone périphérique est une sorte de « no man's land » ou de « désert » électronique.

Par conséquent, le composant thermométrique **9** se trouve implanté à distance de la piste résistive **1.** Il ne se trouve donc pas à proximité immédiate des zones de la coupelle où le tartre va se déposer de façon relativement importante, au fur et à mesure des cycles de chauffage.

Ainsi, avec un appareil construit selon l'invention, l'entartrage de la coupelle ne peut pratiquement pas entraîner, pour une même température réelle du liquide, de dérive du signal délivré par le composant thermométrique **9.** En d'autres termes, le composant thermométrique mesure la température du liquide le plus directement possible, sans avoir à passer par une mesure intermédiaire elle-même corrigée par interpolation selon un étalonnage préétabli.

Par ailleurs, l'utilisation d'un composant électronique pour mesurer la température du liquide chauffé, permet de supprimer le canal d'amenée de vapeur utilisé antérieurement pour détecter l'ébullition du liquide. Dans le cas où on utilise une résistance variable de type à coefficient de température négatif, on peut en outre obtenir une meilleure précision dans la mesure de la température du liquide.

En d'autres termes, le composant thermométrique **9** est implanté sur la plaque isolante **2** au sein d'une région que l'on peut qualifier de « froide » relativement aux températures qui règnent à proximité des pistes résistives. En effet, compte tenu de la convexion thermique qui se produit au sein du liquide et de la conduction thermique qui se produit dans la coupelle, la température de la région « froide » s'élève légèrement au-dessus de la température du liquide, notamment lors de l'ébullition.

Ainsi, dans le cas de l'eau, la température à ébullition est de 100°C, tandis que la température maximale de la région froide est comprise entre 80°C et 105°C. En cas d'absence de liquide, bien évidemment, l'énergie calorifique émise par la piste résistive **1** est moins bien dissipée, si bien que la région froide peut dépasser les 105°C. Mais dans un tel cas, on peut prévoir un élément de sécurité thermique, tel qu'un fusible, pour arrêter l'alimentation électrique.

En pratique, la zone périphérique présente une largeur d'au moins 5 mm exempte de piste résistive (1) et de composants électroniques. Elle constitue ainsi un « no man's land » ou un désert électronique délimitant la région « froide » de la plaque isolante **2.**

Dans l'exemple de la figure 1, tous les composants électroniques du dispositif de contrôle sont implantés au sein de cette région froide, ce qui permet de leur garantir une durée de vie minimale. Par ailleurs, la superficie de la région froide exempte de piste résistive **1** représente 15% de la superficie totale de la plaque isolante **2.** Cette caractéristique permet de délimiter une région froide relativement étendue dont la température plafonne légèrement au-dessus de celle du liquide.

Par ailleurs, dans l'exemple de la figure 1, le composant thermométrique **9** est implanté dans la portion centrale de la plaque isolante **2.** Cela permet de relever une température encore plus directement représentative du liquide chauffé et pratiquement indépendante des phénomènes de convexion thermique pouvant se produire sur les bords du réservoir, donc de la coupelle.

Par ailleurs, la figure 1 montre d'autres composants du dispositif de contrôle de la bouilloire, dont les fonctions sont analogues à ceux de l'art antérieur. Parmi ces composants, on trouve notamment :
- le connecteur **3, 23** d'alimentation à la tension du secteur, par exemple sous 220 V, dont les broches sont soudées sur une couche métallique, par exemple en argent, sérigraphiée sur la plaque isolante **2 ;**
- une broche de terre **4** directement soudée sur l'armature métallique de base **21,** par exemple en inox, jouant le rôle de radiateur ; cette broche de terre peut être isolée des broches d'alimentation par les couches d'isolant formant la plaque isolante **2 ;**
- des résistances **5** pour l'alimentation en basse tension, par exemple sous 15 V, du circuit électronique de commande de l'appareil (au centre de la plaque isolante **2** sur la figure 1) dès qu'il est posé sur son socle ;
- des contacts de mise en marche **7** connectés aux entrées du microcontrôleur **6 ;**
- un fusible thermique **13** conventionnel jouant le rôle d'élément de sécurité en cas de défaut du circuit de régulation piloté par le microcontrôleur **6 ;**
- une diode électroluminescente **12** jouant le rôle de témoin lumineux de marche/arrêt et dont la lumière est canalisée vers l'extérieur de la bouilloire ;
- un élément de détection **10** de mise en marche « à sec », c'est-à-dire en l'absence de liquide, en l'occurrence constitué également d'une thermistance à coefficient de température négatif.

En fonctionnement, lorsque la piste résistive **1** de l'élément chauffant est électriquement alimentée, le liquide contenu dans le réservoir s'échauffe, ce qui fait monter la température de l'environnement du composant thermométrique **9.** Ainsi, lorsque l'eau est à ébullition, le microcontrôleur **6** pilote le composant de commutation **11** selon le signal issu du composant thermométrique **9,** de manière à ouvrir le circuit d'alimentation électrique de la piste résistive **1** et à stopper ainsi le chauffage du liquide. Le passage de l'eau à l'ébullition est déterminé par la mesure effectuée par résistance **9** à coefficient de température négatif (C.T.N.).

Par ailleurs, selon une forme de réalisation également avantageuse de l'invention, non représentée sur la figure 1 , on peut prévoir d'implanter un deuxième composant thermométrique **8** au niveau d'une zone susceptible d'entartrage, en pratique à proximité (3 mm environ) d'une piste résistive chauffante, de manière à détecter, voire à quantifier le phénomène d'entartrage de la bouilloire.

En pratique, ce deuxième composant thermométrique **8** peut être le même que l'élément de détection **10** de mise en marche « à sec ».

En effet, l'écart entre les températures mesurées par le composant thermométrique **9** et par ce deuxième composant thermométrique supplémentaire est fonction de l'épaisseur de la couche de tartre déposée sur la coupelle. Par conséquent, il est possible de quantifier l'entartrage de la bouilloire et, partant, d'en avertir l'utilisateur en cas de déplacement d'un seuil prédéterminé.

L'utilisateur peut ainsi être informé du niveau préoccupant de l'entartrage de sa bouilloire. Si la bouilloire est détartrée, une telle caractéristique permet en outre d'assurer un fonctionnement sans dérive du premier composant thermométrique puisque le peu de tartre qui pourrait éventuellement se déposer à son niveau est supprimé en temps voulu.

Pour la fabrication de l'appareil objet de l'invention, on peut opérer selon un procédé à la mise en oeuvre relativement automatisée, de manière à produire de tels appareils électriques à coût réduit et selon une qualité constante.

Un tel procédé comprend les étapes consistant à :
- réaliser de façon automatisée une couche isolante primaire sur l'armature métallique **21** de base ;
- réaliser de façon automatisée la piste résistive **1** par sérigraphie sur la plaque, ou couche, isolante **2 ;**
- réaliser de façon automatisé un circuit de pistes conductrices sur la plaque ou couche isolante **2;**
- revêtir de façon automatisée la couche isolante **2** d'au moins une couche de protection, en ménageant des ajours aux emplacements prévus pour les connexions de composants et de connecteurs ;
- réaliser de façon automatisée un dispositif de contrôle comportant une pluralité de composants électroniques.

Parmi ces composants se trouvent notamment la résistance C.T.N. **9**, un composant de commutation **11** du circuit d'alimentation de l'élément chauffant, un composant de commande 6 de la commutation en fonction des signaux la résistance C.T.N. **9** ainsi qu'une deuxième résistance C.T.N. (non représentée) destinée à déterminer l'état d'entartrage de la bouilloire. Au cours de l'étape de réalisation des connexions électriques entre composants, les composants électroniques sont reliés par des pistes électriquement conductrices, également réalisées de façon automatisée.

Selon ce procédé, la résistance C.T.N. **9** est implantée sur la plaque isolante **2** au sein d'une région exempte de piste résistive **1** et entourée du « no man's land », c'est-à-dire de la zone périphérique exempte de piste résistive et de composants électroniques.

Par ailleurs, les liaisons électriques entre composants et des plots d'extrémités des pistes conductrices sont réalisées par dépôt d'une couche, par exemple d'argent, dans les ajours situés aux emplacements afférents. D'autres couches sont ensuite réalisées de façon à protéger l'ensemble des composants électroniques et des conducteurs, tels que piste résistive et liaisons électriques, déposés sur la face « sèche » de la coupelle.

Il ressort de ce qui précède que l'appareil objet de l'invention présente une fiabilité améliorée, car la régulation de température ne dépend pas de l'entartrage de l'élément chauffant. De plus, compte tenu de sa structure, la production d'un tel appareil se trouve facilitée, donc son prix de revient et son encombrement s'en trouvent réduits.

En outre, l'implantation des composants électriques ou électroniques peut être réalisée avec un encombrement réduit, tout en leur assurant une durée de vie relativement importante, car ils ne sont pas chauffés de façon excessive du fait de l'éloignement de la piste résistive.

L'implantation d'une diode lumineuse dans le circuit du dispositif de contrôle permet, grâce à un conduit de lumière issue de l'une bague de maintien **28,29** ou de la jupe inférieure **27,** de réaliser un témoin lumineux pour un surcoût très faible. Le conduit peut amener la lumière en plusieurs endroits périphériques de la jupe inférieure **27** pour une meilleure visibilité.

Un tel appareil peut être employé pour chauffer de l'eau, du lait ou un liquide similaire. En fonction de son utilisation, il peut être communément dénommé bouilloire ou « mousseur » de lait etc.

## Revendications

1. Appareil électrique ménager pour le chauffage de liquide comportant un réservoir destiné à contenir le liquide à chauffer, un élément chauffant présentant au moins une piste résistive (1) réalisée par sérigraphie sur une plaque électriquement isolante (2) solidaire d'une fraction dudit réservoir, et un dispositif de contrôle de l'alimentation électrique dudit élément chauffant, ledit dispositif de contrôle comportant une pluralité de composants électroniques parmi lesquels se trouvent au moins un composant thermométrique (9), un composant de commutation (11) apte à ouvrir et à fermer le circuit d'alimentation électrique dudit élément chauffant et un composant de commande (6) destiné à piloter ledit composant de commutation (11) en fonction des signaux issus dudit composant thermométrique (9) ***caractérisé* en ce qu'**au moins lesdits composants thermométriques (9), de commutation (11) et de commande (6) sont implantés sur ladite plaque isolante (2) au sein d'une même région exempte de piste résistive (1), ladite région étant entourée d'une zone périphérique exempte de piste résistive (1) et de composants électroniques (6, 9, 11).

2. Appareil selon la revendication 1, ***caractérisé* en ce que** ladite zone périphérique présente une largeur telle que la température maximale d'un point quelconque de ladite région, en particulier au niveau du composant thermométrique (9), reste inférieure à 105°C lorsque du liquide est présent dans ledit réservoir.

3. Appareil selon l'une des revendications précédentes, ***caractérisé* en ce que** ladite zone périphérique présente une largeur supérieure ou égale à 5 mm.

4. Appareil selon l'une des revendications précédentes, ***caractérisé* en ce que** la superficie de ladite région représente au moins 10% et plus particulièrement au moins 15% de la superficie totale de la plaque isolante (2).

5. Appareil selon l'une des revendications précédentes, ***caractérisé* en ce que** ledit composant thermométrique (9) est implanté dans la portion centrale de la plaque isolante (2).

6. Appareil selon l'une des revendications précédentes, ***caractérisé* en ce que** le composant thermométrique (9) est monté en surface sur la face de la plaque isolante (2) sur laquelle s'étend la piste résistive (1).

7. Appareil selon l'une des revendications précédentes, ***caractérisé* en ce que** le composant thermométrique (9) est une thermistance présentant une résistance variant en fonction de la température de la plaque isolante (2) située au niveau de ladite région.

8. Appareil électrique ménager selon la revendication 7, ***caractérisé* en ce que** la thermistance est de type résistance à coefficient de température négatif.

9. Appareil électrique ménager selon l'une des revendications précédentes, ***caractérisé* en ce qu'**il comporte un deuxième composant thermométrique implanté sur ladite plaque isolante (2) à proximité de ladite piste résistive (1).

10. Appareil électrique ménager selon l'une des revendications précédentes, ***caractérisé* en ce qu'**il comporte un circuit d'avertissement apte à délivrer une information visuelle ou sonore lorsque l'écart entre les températures mesurées par lesdits composants thermométriques dépasse un seuil prédéterminé.

11. Procédé de fabrication d'un appareil électrique ménager pour le chauffage de liquide comportant un réservoir destiné à contenir le liquide à chauffer, ledit réservoir comportant un élément chauffant comprenant une plaque électriquement isolante (2), ledit procédé comprenant les étapes consistant à :
- réaliser de façon automatisée une piste résistive (1) par sérigraphie sur ladite plaque électriquement isolante (2) ;
- revêtir de façon automatisée ladite plaque électriquement isolante (2) d'au moins une couche de protection ;
- réaliser de façon automatisée un dispositif de contrôle comportant une pluralité de composants électroniques parmi lesquels se trouvent au moins un composant thermométrique (9), un composant de commutation (11) apte à ouvrir ou à fermer le circuit d'alimentation électrique dudit élément chauffant et un composant de commande (6) pilotant ledit composant de commutation (11) en fonction des signaux issus dudit composant thermométriques (9), lesdits composants électroniques étant reliés par des pistes électriquement conductrices également réalisées de façon automatisée ;
***caractérisé* en ce qu'**au moins lesdits composants thermométriques (9), de commutation (11) et de commande (6) sont implantés sur ladite plaque électriquement isolante (2) au sein d'une même région exempte de piste résistive (1), ladite région étant entourée d'une zone périphérique exempte de piste résistive (I) et de composants électroniques (6, 9, 11).

12. Procédé selon la revendication 11, ***caractérisé* en ce que** lesdits composants électroniques (6, 9, 11) sont tous implantés de façon automatisée au sein de ladite région.

## Claims

1. Household electrical appliance for heating liquid having a tank intended to contain the liquid to be heated, a heating element having at least one resistive track (1) produced by silk-screening onto an electrically insulating plate (2) integral with a portion of said tank, and a device for controlling the power supply to said heating element, said control device having a plurality of electronic components including at least one thermometric component (9), a switching component (11) capable of opening and closing the power supply circuit of said heating element and a control component (6) intended to control said switching component (11) according to the signals output from said thermometric component (9) ***characterised* in that** at least the said thermometric (9), switching (11) and control (6) components are located on said insulating plate (2) within a single area free of resistive track (1), said area being surrounded by a peripheral zone free of resistive track (1) and of electronic components (6, 9, 11).

2. Appliance according to claim 1, ***characterised* in that** said peripheral zone has a width such that the maximum temperature of any point whatsoever in said area, in particular near the thermometric component (9), remains below 105°C when there is liquid in said tank.

3. Appliance according to one of the preceding claims, ***characterised* in that** the width of said peripheral zone is greater than or equal to 5 mm.

4. Appliance according to one of the preceding claims, ***characterised* in that** the surface area of said area represents at least 10% and more particularly at least 15% of the total surface area of the insulating plate (2).

5. Appliance according to one of the preceding claims, ***characterised* in that** said thermometric component (9) is located in the central portion of the insulating plate (2).

6. Appliance according to one of the preceding claims, ***characterised* in that** the thermometric component (9) is surface mounted on the face of the insulating plate (2) over which the resistive track (1) extends.

7. Appliance according to one of the preceding claims, ***characterised* in that** the thermometric component (9) is a thermistor whose resistance varies according to the temperature of the insulating plate (2) situated near said region.

8. Household electrical appliance according to claim 7, ***characterised* in that** the thermistor is of a negative temperature coefficient resistor type.

9. Household electrical appliance according to one of the preceding claims, ***characterised* in that** it has a second thermometric component located on said insulating plate (2) in proximity to said resistive track (1).

10. Household electrical appliance according to one of the preceding claims, ***characterised* in that** it has a warning circuit capable of providing a visible or audible signal when the difference between the temperatures measured by said thermometric components exceeds a predetermined threshold.

11. Method for manufacturing a household electrical appliance for the heating of liquid having a tank intended to contain the liquid to be heated, said tank having a heating element including an electrically insulating plate (2), said method including stages which consist of:
- automated production of a resistive track (1) by silk-screening onto said electrically insulating plate (2);
- automated coating of said electrically insulating plate (2) with at least one protective layer;
- automated production of a control device having a plurality of electronic components amongst which are at least one thermometric component (9), a switching component (11) capable of opening or closing the power supply circuit of said heating element and a control component (6) controlling said switching component (11) in accordance with signals output from said thermometric component (9), said electronic components being connected by electrically conductive tracks whose production is also automated;
***characterised* in that** at least said thermometric (9), switching (11) and control (6) components are located on said electrically insulating plate (2) within a single area free of resistive track (1), said area being surrounded by a peripheral zone free of resistive track (1) and of electronic components (6, 9, 11).

12. Method according to claim 11, ***characterised* in that** the positioning of all said electronic components (6, 9, 11) within said area is automated.

## Patentansprüche

1. Elektrisches Haushaltsgerät zum Erwärmen von Flüssigkeit, einen Behälter, der dazu bestimmt ist, die zu erwärmende Flüssigkeit zu enthalten, ein Heizelement, das mindestens eine Widerstandsbahn (1) aufweist, die durch Siebdruck auf einer elektrisch isolierenden Platte (2) ausgebildet ist, die mit einem Abschnitt des Behälters fest verbunden ist, und eine Vorrichtung zur Überwachung der Stromversorgung des Heizelements umfassend, wobei die Überwachungsvorrichtung mehrere elektronische Bauteile umfasst, worunter sich zumindest ein thermometrisches Bauteil (9), ein Schaltungsbauteil (11), das in der Lage ist, den Stromversorgungsschaltkreis des Heizelements zu öffnen und zu schließen, und ein Steuerbauteil (6) befinden, das dazu bestimmt ist, das Schaltungsbauteil (11) in Abhängigkeit von vom thermometrischen Bauteil (9) abgegebenen Signalen zu steuern, **dadurch gekennzeichnet, dass** zumindest die thermometrischen Bauteile (9), das Schaltungsbauteil (11) und das Steuerbauteil (6), auf der isolierenden Platte (2) in denselben Bereich, der frei von der Widerstandsbahn (1) ist, eingesetzt sind, wobei der Bereich von einer umfänglichen Zone umgeben ist, die frei von der Widerstandsbahn (1) und den elektronischen Bauteilen (6, 9, 11) ist.

2. Gerät nach Anspruch 1, **dadurch gekennzeichnet, dass** die umfängliche Zone eine derartige Breite aufweist, dass die Höchsttemperatur eines beliebigen Punkts des Bereichs, insbesondere bei dem thermometrischen Bauteil (9), unter 105°C bleibt, wenn Flüssigkeit in dem Behälter vorhanden ist.

3. Gerät nach einem der vorhergehenden Ansprüche, **dadurch gekennzeichnet, dass** die umfängliche Zone eine Breite aufweist, die größer oder gleich 5 mm ist.

4. Gerät nach einem der vorhergehenden Ansprüche, **dadurch gekennzeichnet, dass** die Oberfläche des Bereichs mindestens 10%, und im Spezielleren mindestens 15% der Gesamtoberfläche der isolierenden Platte (2) darstellt.

5. Gerät nach einem der vorhergehenden Ansprüche, **dadurch gekennzeichnet, dass** das thermometrische Bauteil (9) in den mittleren Abschnitt der isolierenden Platte (2) eingesetzt ist.

6. Gerät nach einem der vorhergehenden Ansprüche, **dadurch gekennzeichnet, dass** das thermometrische Bauteil (9) an der Oberfläche der Fläche der isolierenden Platte (2) angebracht ist, auf der die Widerstandsbahn (1) verläuft.

7. Gerät nach einem der vorhergehenden Ansprüche, **dadurch gekennzeichnet, dass** das thermometrische Bauteil (9) ein Heißleiterwiderstand ist, der einen Widerstandswert hat, der in Abhängigkeit von der Temperatur der isolierenden Platte (2) variiert, die sich bei diesem Bereich befindet.

8. Elektrisches Haushaltsgerät nach Anspruch 7, **dadurch gekennzeichnet, dass** der Heißleiterwiderstand von der Art eines Widerstands mit negativem Temperaturkoeffizienten ist.

9. Elektrisches Haushaltgerät nach einem der vorhergehenden Ansprüche, **dadurch gekennzeichnet, dass** es ein zweites thermometrisches Bauteil umfasst, das in der Nähe der Bahn (1) auf die isolierende Platte (2) gesetzt ist.

10. Elektrisches Haushaltgerät nach einem der vorhergehenden Ansprüche, **dadurch gekennzeichnet, dass** es einen Alarmschaltkreis umfasst, der in der Lage ist, eine optische oder akustische Meldung abzugeben, wenn der Unterschied zwischen den durch die thermoelektrischen Bauteile gemessenen Temperaturen einen vorbestimmten Schwellenwert überschreitet.

11. Verfahren zur Herstellung eines elektrischen Haushaltsgeräts zum Erwärmen von Flüssigkeit, einen Behälter umfassend, der dazu bestimmt ist, die zu erwärmende Flüssigkeit zu enthalten, wobei der Behälter ein Heizelement umfasst, das eine elektrisch isolierende Platte (2) umfasst, wobei das Verfahren die Schritte umfasst, die darin bestehen:
- auf automatisierte Weise eine Widerstandsbahn (1) durch Siebdruck auf der elektrisch isolierenden Platte (2) herzustellen;
- auf automatisierte Weise die elektrisch isolierende Platte (2) mit mindestens einer Schutzschicht zu überziehen;
- auf automatisierte Weise eine Überwachungsvorrichtung herzustellen, die mehrere elektronische Bauteile umfasst, worunter sich zumindest ein thermometrisches Bauteil (9), ein Schaltungsbauteil (11), das in der Lage ist, den Stromversorgungsschaltkreis des Heizelements zu öffnen und zu schließen, und ein Steuerbauteil (6) befinden, welches das Schaltungsbauteil (11) in Abhängigkeit von vom thermometrischen Bauteil (9) abgegebenen Signalen steuert, wobei die elektronischen Bauteile durch elektrisch leitende Bahnen verbunden sind, die ebenfalls auf automatisierte Weise hergestellt werden;
**dadurch gekennzeichnet, dass** zumindest die thermometrischen Bauteile (9), das Schaltungsbauteil (11) und das Steuerbauteil (6), auf der isolierenden Platte (2) in denselben Bereich, der frei von der Widerstandsbahn (1) ist, eingesetzt werden, wobei der Bereich von einer umfänglichen Zone umgeben ist, die frei von der Widerstandsbahn (1) und den elektronischen Bauteilen (6, 9, 11) ist.

12. Verfahren nach Anspruch 11, **dadurch gekennzeichnet, dass** die elektronischen Bauteile (6, 9, 11) alle auf automatisierte Weise in den Bereich eingesetzt werden.
